# EUROPEAN PATENT APPLICATION

(11) **EP 4 512 751 A1**
(43) Date of publication of application: **26.02.2025**
(21) Application number: 22938381.5
(22) Date of filing: 17.10.2022
(51) Int. Cl.: B65G 33/00, A01D 46/00

(54) **MACHINE FOR TRANSFERRING FRUIT FROM A FRUIT HARVESTER TO A TANK TRUCK OR TRAILER FOR TRANSPORTING AND STORING THE FRUIT**

(30) Priority: 18.04.2022 ES 202230347
(71) Applicant: Tenias Harvester, S.L., 50600 Ejea De Los Caballeros (Zaragoza) (ES)
(72) Inventor: JESÚS, Tenías Sancho, 50600 EJEA DE LOS CABALLEROS ( ZARAGOZA) (ES)
(74) Representative: Herrero & Asociados, S.L.
(86) International application number: PCT/ES2022/070652
(87) International publication number: WO 2023/203262

(57) **Abstract**

It consists of a self-propelled machine with a cabin (6) capable of tilting for a better maneuverability of the same, and which has a hopper (2) on which the harvesting machineunloads, which has augers (7) that homogeneously distribute the product within the hopper, a hopper (2) that is linked to the frame (1) of the machine by means of a scissor-type lifting mechanism (9) controllable from the cabin (6). The hopper (2) has an unloading flap (8), including on its bottom a longitudinal conveyor belt (10) operable from inside the cabin (6). This allows the harvester to continue working and unload at the point (place) where it is located without affecting the harvesting process, in addition to avoiding the use of additional machinery in the process.

## Description

### FIELD OF THE INVENTION

The present invention refers to a machine for transferring fruit from a fruit harvesting machine, of the type consisting of a self-propelled machine including a log vibrating device, which works continuously, whose load capacity is limited, and which therefore needs to be emptied periodically during its work, so that said fruit can be transferred to a trailer or tanker truck for the transport and/or storage thereof.

The object of the invention is to provide a self-propelled machine which is operated entirely by a single operator and which makes it possible to carry out both the process of collecting the fruits from the harvesting machine and the transfer of said fruits to a trailer or tanker truck for the transport and/or storage of said fruits, so that such unloading can be carried out in the exact place where the harvesting machine is working, i.e. without negatively affecting the harvesting process, avoiding the need to use additional machines in the process, such as the classic elevator belts, all of which has a positive impact from the point of view of environmental impact.

The invention offers the possibility of lining up the fruit for machine drying, arranging the fruit in a row (line) of a width compatible with the most common lifting machines on the market without the need to turn over the fruit.

### BACKGROUND OF THE INVENTION

In the field of practical application of the invention, the invention patent P202130616 is known, which describes a fruit harvesting machine materialized in a self-propelled machine, which includes a vibrator applicable on the trunk of a tree when the presence of the trunk of the tree is detected by means of probes, a machine that has two side frames between which there is a lower longitudinal opening for the passage of the tree as the machine moves, and wherein the two side frames are linked at the top by means of two parallel folding gantries, extended transversely and separated by a certain distance in longitudinal direction, so that the machine has means of dragging, located inside the respective longitudinal channels, to move the detached fruit towards the rear of each of the side frames, where the lateral frames' dragging means unload on lateral conveyor belts that feed voluminous hoppers equipped with peelers at their entrance, wherein the fruits are stored, so that they can be unloaded while the machine is moving by means of ejection conveyor belts which include means of activation/unloading in the presence of a transfer vehicle, by means of a mechanical pushbutton, optical or magnetic sensors or any other sensor without magnetic contact.

However, there are other types of fruit harvesting machines in which a transfer vehicle is also required, and to which the device of the invention is equally applicable by virtue of its great versatility. Moreover, the vast majority of harvesting methods are compatible.

This transfer vehicle, usually materializes in a small trailer associated to a tractor vehicle, since the space between plantation lines is limited, so that the trailer or in its case the harvesting machine itself must approach to a collection point enabled for this purpose, normally coinciding with the beginning or end of the plantation where the corresponding trailer or tanker truck will be set up for the final collection of the fruit, for which it is necessary to lift the fruit from the transfer vehicle, using lifting belts with their corresponding motors, which requires the presence of at least two workers, one controlling the vehicle and the other controlling the belt.

Thus, it is a process involving several machines, each with their corresponding internal combustion engines, which complicate the process and clearly generate undesirable emissions of polluting gases, in addition to requiring the labor of several workers.

### BRIEF SUMMARY OF THE INVENTION

The machine for the transfer of fruits from a fruit harvesting machine to a trailer or tanker for the transport and storage of the fruits solves in a fully satisfactory manner the above-mentioned problem on the basis of a highly efficient solution.

For this purpose, and more specifically, the machine of the invention is constituted on the basis of a self-propelled vehicle which can be driven entirely by a single operator, in which is defined a rolling chassis linked through the corresponding transmission to a propulsion engine of the machine, with a front steering axle governed through a cabin (cab), which has the particularity that it can rotate 180°, so that the driver can always see straight ahead where this person is going. This feature has advantages both from the point of view of safety and comfort for the operator, since the vehicle has to move between the plantation lines, avoiding damage to the trees in therein placed.

In this sense, on the chassis of the vehicle there will be a fruit collection hopper, open at the top and whose mouth will be aligned with the ejection conveyor belts of the harvesting machine, or fruit ejection system, hopper that will have a maximum width of 2.50 meters which makes the machine perfectly accessible through the plantation lines defined between alignments of trees without risk of damaging them. These dimensions make it possible to transport the machine by road.

This optimizes the harvesting process, since the harvesting machine can continue working continuously without the need to stop for emptying its harvesting hoppers, since it includes, as stated in the background section of the invention, means for activating/unloading the discharge belts of its hoppers in the presence of the machine of the invention, which can move synchronously with said harvesting machine.

As previously mentioned, the device of the invention presents a great versatility, so that it is not exclusively applicable to harvesting machines such as the one described in the invention patent P202130616 but can work with any system in which a fruit propulsion belt is available.

Thus, this allows the unloading of the fruit in any part of the field, unlike other machines that must have a designated point (place) for such unloading, which is clearly an undesirable waste of time.

In accordance with another of the characteristics of the invention, since the hopper will be loaded preferably at its extremity opposite to that of the driving cab of the machine, in order to ensure a good distribution of the loaded product along the entire hopper for the collection thereof, as well as to prevent said product from caking, longitudinal augers will be established within the hopper whose motorized drive guarantees the correct distribution of the fruit along the hopper.

Finally, it should be noted that in order to be able to unload the contents of the hopper into the corresponding trailer or tanker truck, the hopper will be linked to the vehicle chassis by means of a scissor-type structure, hydraulically operated and controllable through the operator's cab, in such a way that this scissor structure allows the hopper to be raised to the required height, establishing at the bottom of the hopper, of a decreasing section with a descending / downwarddirection, a longitudinal conveyor belt that communicates with a discharge gate through which it is possible to empty the contents of the hopper onto the final fruit collection vehicle.

In this way, a totally autonomous, maneuverable, comfortable and safe machine is obtained, which optimizes the operating times and reduces the need for the participation of other machines in the installation, such as the conveyor belts that lift the fruit to the trailer or tank of the corresponding final fruit collection vehicle for its transport and/or subsequent storage.

### BRIEF DESCRIPTION OF THE DRAWINGS

In order to complement the description to be made below and with the purpose of helping to a better understanding of the characteristics of the invention, in accordance with a preferential example of practical realization of the same, a set of drawings is attached as an integral part of said description, in which the following has been represented for illustrative and non-limiting purposes:
Figure 1.- Shows a schematic perspective view of a machine for transferring fruit from a fruit harvesting machine to a trailer or tanker truck for transporting the same made in accordance with the object of the present invention, in which the machine appears devoid of the pair of augers involved in its fruit collection hopper.
Figure 2.- Shows a view similar to that of figure 1, but in which the cab of the machine is rotated 90°.
Figure 3.- Shows a front elevation view of the machine.
Figure 4.- Shows, lastly, a perspective view of the machine in the hopper lifting position, in order to proceed to empty the hopper on the corresponding trailer or tanker for transporting the harvested fruit, which is not shown in the figure because it is a conventional trailer or tanker.

### PREFERRED EMBODIMENT OF THE INVENTION

In view of the figures shown above, it can be seen that the machine for transferring fruit from a fruit harvesting machine to a trailer or tanker truck for transporting the same is made up of a rolling, self-propelled frame (1), on which a pair of front wheelsare defined (5) for steering, as well as a pair of rear wheels (3), whether one, the other or both may be actioned by the corresponding motor (4) by means of the corresponding mechanical transmission.

The vehicle is controlled by a single operator through a cab / cabin (6) established in correspondence with the front end of the frame (1), and which is linked to it by means of a mechanism for regulating the relative angular position with respect to it, the cabin (6) being able to rotate 180° with respect to the frame (1).

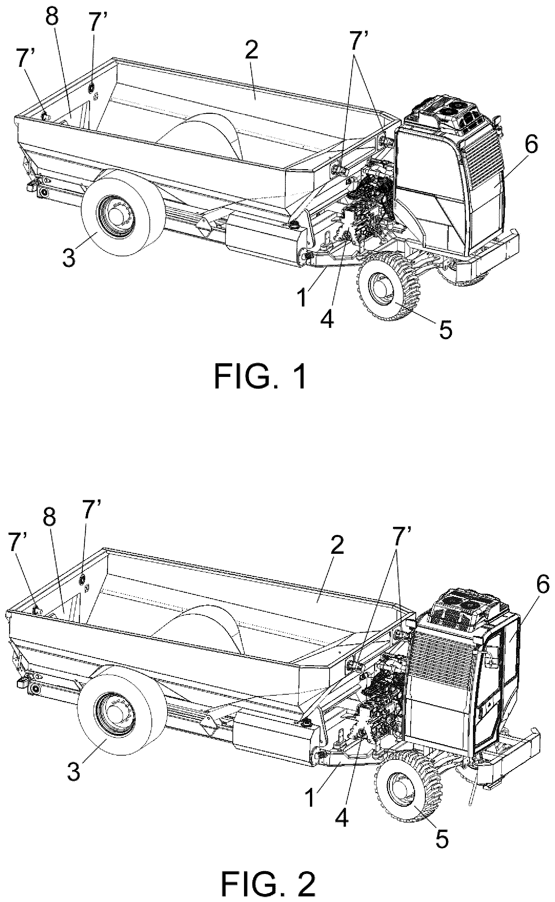

This makes it possible to vary the angular position of the cab, as shown in figures 1 and 2 in different positions, so that if the vehicle is approaching in reverse gear towards the corresponding harvesting machine, the operator (driver) can adopt a relative driving position that improves and facilitates the control of the vehicle, in a safer manner.

On the frame (1) there is a hopper (2) open at the top, with a "U" section, that is to say, decreasing in width in a downward direction.

This hopper, which has a maximum width of 2.50 meters, has a height according to the exit height of the fruit ejection conveyor belts of the harvesting machine or other harvesting machines on the market, not shown in the figures, so that it can automatically receive the fruit when approaching the harvesting machine, as it includes means of detection of said vehicle.

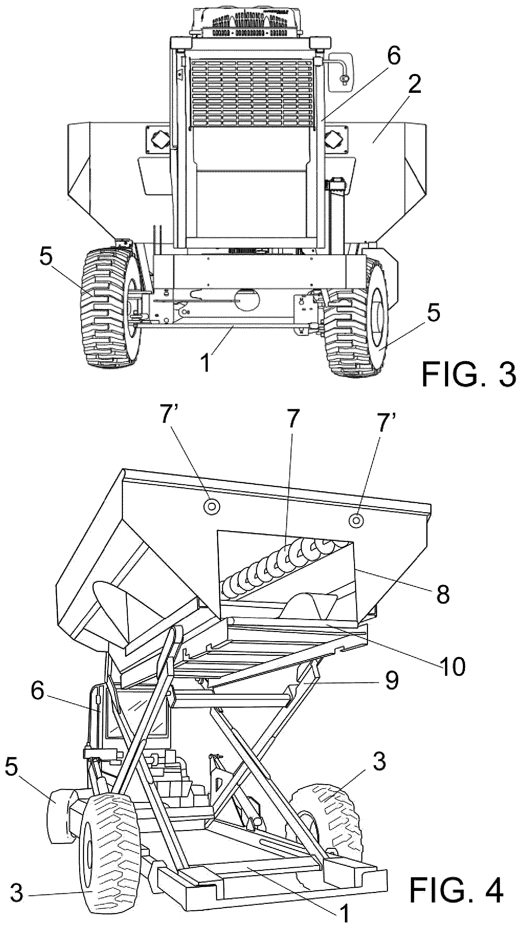

Since the hopper (2) will preferably be loaded at its end opposite to that of the driving cab (6) of the machine, it is foreseen that two longitudinal augers (7) (visible in figure 4) are installed therein, which are supported on bearings (7') and which are actioned and controlled from the cab (6), in such a way that these longitudinal augers (7) allow to redistribute along the hopper the fruits that are piled up on its extremity in order to obtain an homogeneous distribution of the same, avoiding also the caking of the former.

As mentioned above, and as can be seen in Figure 4, the hopper is connected to the frame (1) by means of a scissor-type lifting mechanism (9), also controllable from the cabin (6), to raise the hopper to a suitable height for direct emptying onto the corresponding trailer or tanker truck without the need for intermediate machines, in a way that corresponding to its rear end there is a discharge hatch (8), while at the bottom of the hopper there is a conveyor belt (10) whose operation is also controlled from inside the cabin (6).

In this way, and as previously mentioned, a self-propelled machine is obtained which is operated entirely by a single operator in a comfortable and safe manner, which allows to carry out both the process of collecting the fruits from the harvesting machine and the transfer of these to a trailer or tanker truck for the transport and/or storage of said fruits, so that said unloading can be done in the exact place where the harvesting machine is working, without negatively affecting its harvesting process, avoiding the need to use additional machines in the process.

## Claims

1. ^{a}.- Machine for the transfer of fruits from a fruit harvesting machine to a trailer or tanker truck for the transport and storage of the same, **characterized in that** it is constituted from a self-propelled vehicle in which a rolling frame is defined (1) linked through the corresponding transmission to an engine (2) of propulsion of the machine, with asteering front axle, being the machine controllable through a cabin (6), which includes a mechanism for regulating the relative angular position with respect to said frame (1), frame (1) on which a hopper (2) open at the topis established, with a decreasingsection in width in a downward direction, a hopper having a height according to the exit height of the fruit ejection conveyor belts of the corresponding fruit harvesting machine, and having one or more longitudinal augers (7) operable from the cabin (6) determining means of homogeneous distribution of the loaded product along the whole length of the hopper, with the particularity that the hopper (2) is connected to the frame (1) by means of a scissor-type lifting mechanism (9) that can be controlled from the cabin (6), in correspondence with an unloading flap (8) at its extremity, as well as a longitudinal and unloading conveyor belt (10) on the bottom of the hopper that can be operated from inside the cabin (6).

2. ^{a}.- Machine for the transfer of fruits from a fruit harvesting machine to a trailer or tanker truck for the transport and storage of the same, according to claim 1^{a}, **characterized by** the fact that the hopper has a maximum width of 2.50 meters.
